# EUROPEAN PATENT APPLICATION

(11) **EP 4 582 229 A1**
(43) Date of publication of application: **09.07.2025**
(21) Application number: 23859693.6
(22) Date of filing: 05.04.2023
(51) Int. Cl.: B25J 19/00

(54) **POWER TRANSMISSION DEVICE, AND ROBOT**

(30) Priority: 30.08.2022 JP 2022137156
(71) Applicant: Sumitomo Heavy Industries, Ltd., Tokyo 141-6025 (JP)
(72) Inventor: TAMURA, Mitsuhiro, Yokosuka-shi, Kanagawa 237-8555 (JP)
(74) Representative: Louis Pöhlau Lohrentz
(86) International application number: PCT/JP2023/014098
(87) International publication number: WO 2024/047921

(57) **Abstract**

According to a certain aspect, there is provided a power transmission device 5 incorporated into a robot 1 that grips a cleaning target object 2 or a cleaning member and that performs a process of cleaning the cleaning target object 2, the power transmission device including: food-grade grease that is applied to seal a specific gap portion, the specific gap portion being provided between an internal space and an external space of the power transmission device 5.

## Description

### Technical Field

The present invention relates to a power transmission device and a robot.

### Background Art

A device related to dishwashing is known. For example, PTL 1 describes a dishwashing system including a dishwasher and a robot device. The dishwasher cleans dishes in a washing chamber of a dishwasher body while transporting the dishes using a conveyor. The robot device includes a robot arm mechanism and transfers the dishes transported to a predetermined area by the conveyor to another area.

### Citation List

### Patent Literature

[PTL 1] International Publication No. 2018/034251

### Summary of Invention

### Technical Problem

The inventor has made the following observations regarding the power transmission device. Robots have been expanding from industrial applications to service applications. For example, robots are used in processes such as loading and unloading dishes into and out of the dishwasher during a dishwashing process. However, robots of the related art may cause issues due to scattering of detergent. PTL 1 cannot be said to sufficiently disclose a technology for addressing an environment where detergent is scattered.

An object of the present invention is to provide a technology for a power transmission device capable of reducing an effect of detergent.

### Solution to Problem

In order to achieve the above-described object, according to a certain aspect of the present invention, there is provided a power transmission device incorporated into a robot that grips a cleaning target object or a cleaning member and that performs a process of cleaning the cleaning target object, the power transmission device including: food-grade grease that is applied to seal a specific gap portion, the specific gap portion being provided between an internal space and an external space of the power transmission device.

Any combination of the above components and a substitution of the components and expressions of the present invention between methods, systems, and the like are also effective as an aspect of the present invention.

### Advantageous Effects of Invention

According to the present invention, it is possible to provide a technology for a power transmission device capable of reducing an effect of detergent.

### Brief Description of Drawings

Fig. 1 is a side view schematically showing a robot including a first power transmission device of an embodiment.
Fig. 2 is a side view schematically showing the first power transmission device of Fig. 1.
Figs. 3A to 3C are side views showing specific gap portions of the first power transmission device of Fig. 1 in an enlarged manner.
Fig. 4 is a side view schematically showing a fourth power transmission device of Fig. 1.

### Description of Embodiments

Hereinafter, the present invention will be described with reference to each drawing based on a preferred embodiment. In the embodiment and modification examples, the same or equivalent components and members will be denoted by the same reference numerals, and duplicated descriptions will not be repeated as appropriate. In addition, the dimensions of the members in each drawing are enlarged or reduced as appropriate to facilitate understanding. Further, some members that are not important for describing the embodiment are not shown in each drawing.

Additionally, separate components having common characteristics are distinguished by adding ordinal numbers such as "first" and "second" to the front of the element names, and these ordinal numbers are omitted when collectively referred to. Further, terms including ordinal numbers such as first and second are used to describe various components, but these terms are only used to distinguish one component from another component and do not limit the components defined by these terms.

### [EMBODIMENT]

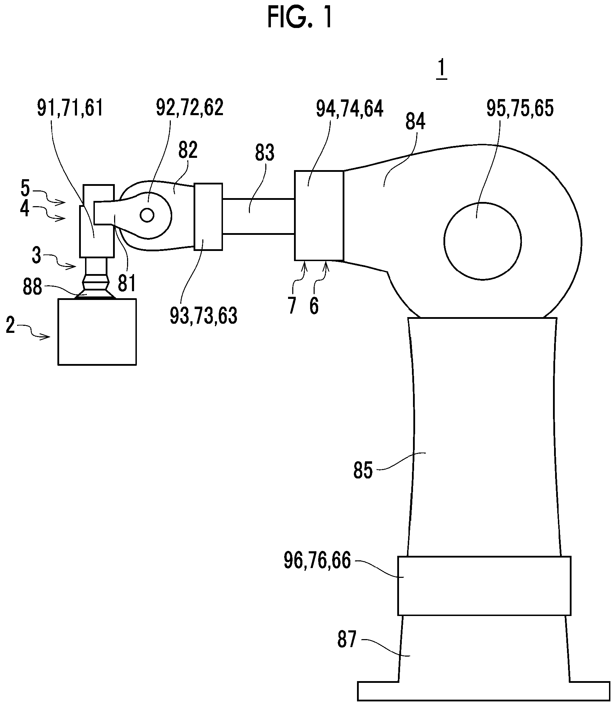

Hereinafter, a configuration of a robot 1 including a first power transmission device of an embodiment of the present invention will be described with reference to Fig. 1. Fig. 1 is a side view schematically showing the robot 1. A direction extending upward and downward in the drawing will be referred to as an up-down direction of the robot 1, a direction extending leftward and rightward in the drawing will be referred to as a left-right direction of the robot 1, and a direction extending forward and rearward in the drawing will be referred to as a front-rear direction of the robot 1. A front side of the drawing in the front-rear direction will be referred to as a "front" and a "forward", and an opposite side thereof will be referred to as a "rear" and a "rearward".

The robot 1 is a robot that grips a cleaning target object 2 and that performs a process of cleaning the cleaning target object 2. The cleaning target object 2 is not particularly limited as long as it is an object to be cleaned, and examples thereof include various objects such as not only tableware but also clothes and industrial products. The robot 1 is not limited to the robot that grips the cleaning target object 2 and may be a robot that grips a cleaning member used for a cleaning operation of the cleaning target object 2. The cleaning member is not particularly limited as long as it is used for the cleaning operation of the cleaning target object 2, and examples thereof include a cleaning scourer, a detergent container, and a water spray nozzle. The robot 1 includes a specific power transmission device 5 that is incorporated into a specific drive unit 4 located close to a gripping unit 3 of the cleaning target object 2, and a separate power transmission device 7 that is incorporated into a separate drive unit 6 located farther from the gripping unit 3 than the specific drive unit 4. The specific power transmission device 5 is a power transmission device including a specific gap portion between an internal space and an external space of the power transmission device 5. The separate power transmission device 7 is a power transmission device in which an oil seal is disposed in a gap portion provided between an internal space and an external space. The specific power transmission device 5 and the separate power transmission device 7 will be referred to simply as a "power transmission device" when collectively referred to.

The power transmission device incorporated into the robot 1 is not particularly limited as long as the device can transmit power, and for example, the power transmission device may be a gear device, a traction drive, a gear motor, a motor, or the like. In this example, the power transmission device is a gear device that decelerates rotation input from a motor (not shown) serving as a power source and that outputs the rotation to a driven member from an output member, in order to drive joints of the robot 1.

The robot 1 will be described. The robot 1 is an articulated robot including the gripping unit 3 that grips the cleaning target object 2 on a tip end side and including first to sixth joints 91 to 96 that are provided in order from the gripping unit 3 on the tip end side. The robot 1 includes first to fifth intermediate members 81 to 85, such as an arm supported by a base stage 87 on a base end side, via the first to sixth joints 91 to 96. The first to sixth joints 91 to 96 are provided with first to sixth drive units 71 to 76 for driving the joints. The first to sixth drive units 71 to 76 rotate the intermediate members on the tip end side with respect to the intermediate members on the base end side. Motors and first to sixth power transmission devices 61 to 66 that transmit power from the motors to the intermediate members on the base end side are incorporated into the first to sixth drive units 71 to 76. The configuration of the robot 1 is not particularly limited, and various types of robots can be employed. For example, the number of joints into which the power transmission device is incorporated is not limited to six and may be one to five or seven or more. In addition, the same type of power transmission device may be incorporated into all the joints, or different types of power transmission devices may be incorporated into some or all of the joints.

The first to sixth joints 91 to 96 will be referred to simply as a "joint" when collectively referred to. The first to sixth drive units 71 to 76 will be referred to simply as a "drive unit" when collectively referred to. The first to sixth power transmission devices 61 to 66 will be referred to simply as a "power transmission device" when collectively referred to.

A tip end side of the first joint 91 is coupled to the gripping unit 3, and a counter-tip end side is coupled to the first intermediate member 81. A tip end side of the second joint 92 is coupled to the first intermediate member 81, and a counter-tip end side is coupled to the second intermediate member 82. A tip end side of the third joint 93 is coupled to the second intermediate member 82, and a counter-tip end side is coupled to the third intermediate member 83. A tip end side of the fourth joint 94 is coupled to the third intermediate member 83, and a counter-tip end side is coupled to the fourth intermediate member 84. A tip end side of the fifth joint 95 is coupled to the fourth intermediate member 84, and a counter-tip end side is coupled to the fifth intermediate member 85. A tip end side of the sixth joint 96 is coupled to the fifth intermediate member 85, and a counter-tip end side is coupled to the base stage 87.

As an example, a suction pad 88 for suctioning and gripping the cleaning target object 2 is attached to the gripping unit 3. The suction pad 88 is, for example, a bellows tube made of a silicon resin, and a tip end thereof is expanded in a conical shape. An air compressor (not shown) is connected to the suction pad 88 via an air tube (not shown). The gripping unit 3 suctions the cleaning target object 2 onto the suction pad 88 using a negative pressure fluid supplied by the air compressor. The gripping unit 3 releases the cleaning target object 2 by stopping the supply of the negative pressure fluid to the suction pad 88. The gripping unit 3 need only be configured to hold the cleaning target object 2, and the configuration is not limited to the suction type. For example, various gripping mechanisms can be employed, such as a gripping mechanism that clamps and holds the cleaning target object 2 and a gripping mechanism that hooks and holds the cleaning target object 2.

The first joint 91 is a joint that torsionally rotates the gripping unit 3 about a rotary shaft extending upward and downward, with respect to the first intermediate member 81. The first joint 91 may be configured to move the gripping unit 3 upward and downward. The second joint 92 is a joint that oscillates and rotates (rotationally moves) the first intermediate member 81 about a rotary shaft extending forward and rearward, with respect to the second intermediate member 82. The third joint 93 is a joint that torsionally rotates the second intermediate member 82 about a rotary shaft extending leftward and rightward, with respect to the third intermediate member 83. The fourth joint 94 is a joint that torsionally rotates the third intermediate member 83 about a rotary shaft extending leftward and rightward, with respect to the fourth intermediate member 84. The fifth joint 95 is a joint that oscillates and rotates the fourth intermediate member 84 about a rotary shaft extending forward and rearward, with respect to the fifth intermediate member 85. The sixth joint 96 is a joint that torsionally rotates (pivots) the fifth intermediate member 85 about a rotary shaft extending upward and downward with respect to the base stage 87.

Among the plurality of drive units, a drive unit that is incorporated into the specific drive unit 4 located close to the gripping unit 3 of the cleaning target object 2 will be referred to as the specific power transmission device 5, and a drive unit that is incorporated into the separate drive unit 6 located farther from the gripping unit 3 than the specific drive unit 4 will be referred to as the separate power transmission device 7. The number of specific drive units 4 and specific power transmission devices 5 may be one or more, and the number of separate drive units 6 and separate power transmission devices 7 may be one or more. In this example, the specific drive unit 4 is exemplified by the first to third drive units 71 to 73, and the specific power transmission device 5 is exemplified by the first to third power transmission devices 61 to 63. Additionally, the separate drive unit 6 is exemplified by the fourth to sixth drive units 74 to 76, and the separate power transmission device 7 is exemplified by the fourth to sixth power transmission devices 64 to 66.

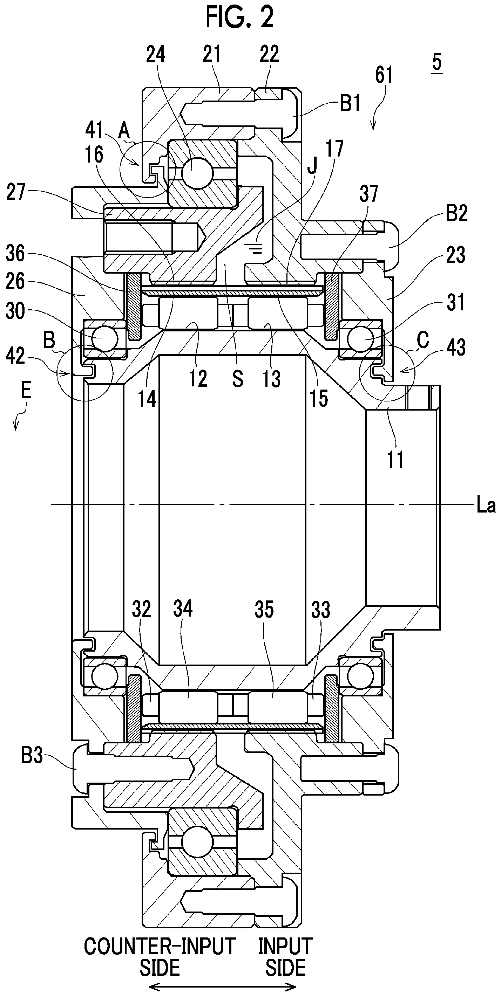

Hereinafter, a configuration of the first power transmission device 61, which is an example of the specific power transmission device 5, will be described with reference to Fig. 2. Fig. 2 is a side view schematically showing the first power transmission device 61. The first power transmission device 61 is a bending meshing type gear device. In the present embodiment, the second and third power transmission devices 62 and 63 are also the bending meshing type gear devices having the same configuration as that of the first power transmission device 61.

The first power transmission device 61 of the embodiment includes an input shaft 11, wave generators 12 and 13, external gears 14 and 15, a main bearing 24, wave generator shaft bearings 30 and 31, wave generator bearings 34 and 35, internal gears 16 and 17, casings 21, 22, and 23, output members 26 and 27, receiving plate members 36 and 37, and specific gap portions 41, 42, and 43. The specific gap portions 41, 42, and 43 will be described below.

Hereinafter, a direction along a center axis La of the internal gears 16 and 17 will be referred to as an "axial direction", and a circumferential direction and a radial direction of a circle centered on the center axis La will be referred to as a "circumferential direction" and a "radial direction", respectively. In addition, hereinafter, for convenience, one side in the axial direction (right side in the drawing) will be referred to as an input side, and the other side (left side in the drawing) will be referred to as a counter-input side. Such directional notation does not limit the usage posture of the first power transmission device 61, and the first power transmission device 61 can be used in any posture. In the first power transmission device 61, the counter-input side faces the gripping unit 3 and is closer to the gripping unit 3 than the input side.

The first wave generator 12 of the wave generators 12 and 13 is disposed on the counter-input side with respect to the second wave generator 13. The first external gear 14 of the external gears 14 and 15 is disposed on the counter-input side with respect to the second external gear 15. The first internal gear 16 of the internal gears 16 and 17 is disposed on the counter-input side with respect to the second internal gear 17. The first wave generator shaft bearing 30 of the wave generator shaft bearings 30 and 31 is disposed on the counter-input side with respect to the second wave generator shaft bearing 31. The first wave generator bearing 34 of the wave generator bearings 34 and 35 is disposed on the counter-input side with respect to the second wave generator bearing 35. The first receiving plate member 36 of the receiving plate members 36 and 37 is disposed on the counter-input side with respect to the second receiving plate member 37.

The first power transmission device 61 is a bending meshing type gear device that rotates the external gears 14 and 15, which mesh with the internal gears 16 and 17, while inducing flexible deformation, to rotate the external gears 14 and 15, thereby outputting an axial rotation component of the external gears 14 and 15.

The input shaft 11 is a hollow shaft member, and the motor of the drive unit is connected to the input shaft 11 on the input side, and power rotation from the motor is input. The input shaft 11 includes the wave generators 12 and 13 and also functions as a wave generator shaft. The wave generators 12 and 13 are integrally formed on an outer periphery of the input shaft 11 and function as the wave generators of the bending meshing type gear device. The wave generators 12 and 13 have an elliptical outer peripheral shape in a cross-section perpendicular to the direction along the center axis La. The term "ellipse" as used in the present specification is not limited to a geometrically precise ellipse but also includes a substantial ellipse.

The external gears 14 and 15 are tubular members having flexibility. The external gears 14 and 15 are integrally provided on an outer peripheral portion of the tubular part that functions as external tooth base to be spaced apart from each other in the axial direction, and have the same number of teeth. The first external gear 14 meshes with the first internal gear 16 that functions as an output internal gear, and the second external gear 15 meshes with the second internal gear 17 that functions as a decelerating internal gear.

The external gears 14 and 15 follow the rotation of the wave generators 12 and 13 and are flexibly deformed into an elliptical shape by the wave generators 12 and 13 via the wave generator bearings 34 and 35. In this case, the external gears 14 and 15 are flexibly deformed to match the shapes of the wave generators 12 and 13, while changing meshing positions with the internal gears 16 and 17 in the circumferential direction. The wave generator bearings 34 and 35 are disposed between the wave generators 12 and 13 and the external gears 14 and 15. In the embodiment, the wave generator bearings 34 and 35 include retainers 32 and 33.

The number of teeth of the first internal gear 16 is the same as the number of teeth of the first external gear 14, and the number of teeth of the second internal gear 17 is larger than the number of teeth of the second external gear 15 by 2i (where i is a natural number equal to or greater than 1). As a result, when the wave generators 12 and 13 rotate, the first internal gear 16 outputs rotation of the same magnitude as the axial rotation component of the external gears 14 and 15.

The casings 21, 22, and 23 include the first casing 21 that rotatably supports the first internal gear 16 via the main bearing 24, the second casing 22 that is disposed on the input side with respect to the first casing 21, and the third casing 23 that is disposed on the input side with respect to the second casing 22. The second casing 22 is integrated with the second internal gear 17. The first casing 21 and the second casing 22 are coupled to each other by a bolt B1. The second casing 22 and the third casing 23 are coupled to each other by a bolt B2. The casings 21, 22, and 23 are fixed to the first intermediate member 81.

The output members 26 and 27 extract the axial rotation component of the external gear 14 and transmit the axial rotation component to a driven device. The output members 26 and 27 include the first output member 26 disposed on the counter-input side with respect to the first external gear 14 and the second output member 27 disposed on the input side with respect to the first output member 26. The second output member 27 is integrated with the first internal gear 16. The first output member 26 and the second output member 27 are coupled to each other by a bolt B3.

The first wave generator shaft bearing 30 is disposed between the first output member 26 and the input shaft 11. The second wave generator shaft bearing 31 is disposed between the third casing 23 and the input shaft 11. The wave generator shaft bearings 30 and 31 rotatably support the input shaft 11 including the wave generators 12 and 13 with respect to the first output member 26 and the third casing 23. Although the configuration of the wave generator shaft bearings 30 and 31 is not limited, the wave generator shaft bearings 30 and 31 in this example are ball bearings.

The main bearing 24 is disposed between the first casing 21 and the second output member 27. The main bearing 24 rotatably supports the output members 26 and 27 with respect to the first casing 21. Although the configuration of the main bearing 24 is not limited, the main bearing 24 in this example is a ball bearing.

The first receiving plate member 36 is disposed on the counter-input side with respect to the first external gear 14. The second receiving plate member 37 is disposed on the input side with respect to the second external gear 15. The receiving plate members 36 and 37 are annular plate members that surround the input shaft 11. The receiving plate members 36 and 37 extend to the counter-input side and the input side with respect to the external gears 14 and 15 and the wave generator bearings 34 and 35 and restrict axial movement of the retainers 32 and 33 to the counter-input side and the input side.

The operation of the first power transmission device 61 will be described. When the input shaft 11 rotates due to the rotation of the motor (not shown), the wave generators 12 and 13 rotate together with the input shaft 11. When the wave generators 12 and 13 rotate, the external gears 14 and 15 are continuously flexibly deformed to match the shapes of the wave generators 12 and 13, while changing the meshing positions with the internal gears 16 and 17 in the circumferential direction. The external gears 14 and 15 rotate relative to the second internal gear 17 by an amount corresponding to a difference in number of teeth between the second internal gear 17 and the second external gear 15 each time the wave generators 12 and 13 rotate once.

In this case, the rotation of the wave generators 12 and 13 is decelerated by a reduction ratio corresponding to the difference in number of teeth, and the external gears 14 and 15 rotate. The first internal gear 16 has the same number of teeth as the first external gear 14. Therefore, the first internal gear 16 rotates in synchronization with the same axial rotation component as the external gears 14 and 15 without changing the relative meshing positions with the external gears 14 and 15 before and after the wave generators 12 and 13 rotate once. The rotation of the first internal gear 16 is transmitted to the gripping unit 3, which is the driven device, via the first output member 26 and the second output member 27. As a result, the rotation input to the input shaft 11 is decelerated and transmitted as the torsional rotation of the gripping unit 3. Since the casings 21, 22, and 23 are fixed to the first intermediate member 81, the gripping unit 3 torsionally rotates with respect to the first intermediate member 81.

A material of each member that constitutes the first power transmission device 61 will be described. The material of each member that constitutes the first power transmission device 61 is not particularly limited, but is configured as follows in the embodiment. The casings 21, 22, and 23 and the output members 26 and 27 are made of a resin material. As the resin material, a pure resin or a resin containing reinforcing fibers can be applied, and for example, various resin materials can be employed, such as a poly ether ether ketone (PEEK) material and a polyacetal or polyoxymethylene (POM). As the resin containing reinforcing fibers, a composite material such as carbon fiber reinforced plastics (CFRP), a composite material of a resin and another different material, a bake material (a paper bake material, a fabric bake material, or the like), or the like can be applied. By making these members from resins, it is possible to achieve a low cost and a weight saving for the first power transmission device 61.

The input shaft 11 (wave generators 12 and 13), the bearings 24, 30, 31, 34, and 35, and the receiving plate members 36 and 37 are made of a steel material (metal material). The external gears 14 and 15 are made of a steel material (metal material) such as nickel-chromium-molybdenum steel. Meanwhile, the internal gears 16 and 17 are made of a carbon fiber reinforced resin material that contains carbon fibers as reinforcing fibers in a base resin. As the base resin, for example, various resin materials such as a PEEK material and a POM material can be employed. In a case where the reinforcing fibers contained in the resin material are fibers that are not bonded into a fabric-like form, injection molding or compression molding can be performed using the resin material. In a case where the material contained in the resin material is fibers that are bonded into a fabric-like or sheet-like form, compression molding can be performed using the resin material.

In order to ensure lubrication of movable portions, a lubricant J is enclosed in an internal space S of the first power transmission device 61.

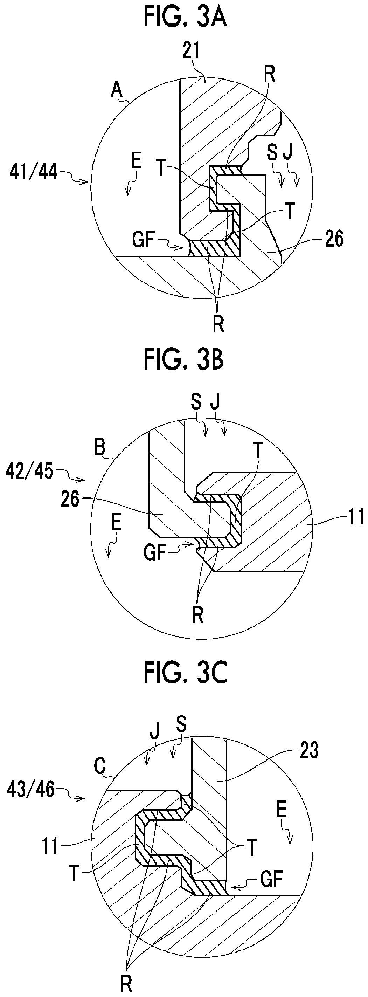

The specific gap portions 41, 42, and 43 will be described with reference to Figs. 3A to 3C. Figs. 3A to 3C are views showing the specific gap portions 41, 42, and 43 of Fig. 2 in an enlarged manner. In order to ensure smooth rotation, a gap portion is provided between members with different peripheral speeds. In order to reduce leakage of the lubricant J enclosed in the internal space S and to reduce the entry of foreign matters into the internal space S, it is desirable that the gap portion includes sealing means.

It is conceivable to use an oil seal made of a synthetic rubber as the sealing means. For example, in a case where the robot 1 is used in processes such as loading and unloading dishes into and out of a dishwasher during a dishwashing process, there is a high possibility that detergent splashes may be scattered onto the power transmission device located close to the gripping unit 3 of the robot 1. From this, the inventor has recognized that in the power transmission device placed in an environment where there is a high possibility of detergent splashes being scattered, the use of the oil seal may lead to the deterioration of the oil seal due to the detergent. However, PTL 1 does not disclose a technology for addressing an environment where detergent splashes are scattered.

As shown in Figs. 2 and 3A to 3C, the first power transmission device 61 is provided with specific gap portions 41, 42, and 43 between the internal space S and an external space E of the first power transmission device 61. The specific gap portions 41, 42, and 43 are expected to function as sealing means. The first specific gap portion 41 is provided in a gap between the first casing 21 and the first output member 26, the second specific gap portion 42 is provided in a gap between the first output member 26 and the input shaft 11, and the third specific gap portion 43 is provided in a gap between the input shaft 11 and the third casing 23. Hereinafter, the first specific gap portion 41 and the second specific gap portion 42 may be referred to as a specific gap portion on the counter-input side, and the third specific gap portion 43 may be referred to as a specific gap portion on the input side. The specific gap portion on the counter-input side is closer to the gripping unit 3 than the specific gap portion on the input side and may more frequently come into contact with detergent droplets.

From this, the first power transmission device 61 of the embodiment includes food-grade grease GF applied to seal the specific gap portions 41, 42, and 43. The food-grade grease GF may be a lubricant that should not come into contact with food but is safe even in a case of being mixed in. As the food-grade grease GF, a lubricant that has been registered with national sanitation foundation international (NSF) H1 or a lubricant that has been certificated in accordance with Hazard, Analysis, Critical, Control, Point (HACCP) can be employed. Additionally, the food-grade grease GF may be a lubricant that has been certified as food-grade grease by a public institution or an equivalent institution.

It is desirable that the food-grade grease GF has a consistency that does not easily flow out of the specific gap portions 41, 42, and 43, and in this example, JIS classification No. 2 or No. 1 for consistency is employed. For example, the food-grade grease GF may be grease with a residual rate (residual amount/initial amount) of 30% or more remaining in the specific gap portions 41, 42, and 43 after a rated usage time of operation (for example, 1000 hours).

From the viewpoint of ensuring the lubrication performance of the movable parts, it is desirable for the lubricant J, which is enclosed in the internal space S, to use a lubricant having characteristics different from those of the food-grade grease GF that seals the specific gap portions 41, 42, and 43. In this regard, in the embodiment, the lubricant J different from the food-grade grease GF is enclosed in the internal space S of the first power transmission device 61. In this case, it is easier to achieve both sealing properties of the food-grade grease GF and the excellent lubrication performance of the lubricant J. The lubricant J may be food-grade grease different from the food-grade grease GF or may be a lubricant that is not food-grade grease.

The specific gap portions 41, 42, and 43 of the embodiment have labyrinth structures 44, 45, and 46 from the viewpoint of increasing the residual rate of the food-grade grease GF. Since the labyrinth structures 44, 45, and 46 are formed by narrow gaps having bends, a ratio of surface tension to a mass of the food-grade grease GF (surface tension/mass) can be increased compared to straight gaps. Therefore, the leakage of the food-grade grease GF can be suppressed. For example, the labyrinth structures 44, 45, and 46 may have a shape such that the residual rate (residual amount/initial amount) of the food-grade grease GF remaining in the specific gap portions 41, 42, and 43 is 30% or more after the rated usage time of operation.

From the viewpoint of increasing the surface tension and the amount of food-grade grease GF that can be held, it is desirable that the gaps of the labyrinth structures 44, 45, and 46 are long. In this regard, the labyrinth structures 44, 45, and 46 of the embodiment are formed by a combination of a radial gap R, which is a radial gap, and a thrust gap T, which is an axial gap. The labyrinth structure 44 includes three radial gaps R and two thrust gaps T that are alternately connected. The labyrinth structure 45 includes two radial gaps R and one thrust gap T that are alternately connected. The labyrinth structure 46 includes three radial gaps R and three thrust gaps T that are alternately connected.

The specific gap portions 41 and 42 of the embodiment include the first specific gap portion 41 and the second specific gap portion 42 in which a relative rotation speed of gap forming members is higher than that in the first specific gap portion 41. In this case, the sealing function can be ensured at each of the portion having a higher relative rotation speed and the portion having a lower relative rotation speed. The relative rotation speed of the gap forming members of the specific gap portions 41 and 42 is higher in the order of the input shaft 11 > the first output member 26 > the first casing 21 (stationary). Therefore, the relative rotation speed of the second specific gap portion 42 formed between the input shaft 11 and the first output member 26 is higher than the relative rotation speed of the first specific gap portion 41 formed between the first output member 26 and the first casing 21.

In the embodiment, the first specific gap portion 41 is disposed radially outward of the second specific gap portion 42. In this case, since the first specific gap portion 41 with a lower relative rotation speed is disposed in a larger-diameter region, and the second specific gap portion 42 with a higher relative rotation speed is disposed in a smaller-diameter region, an increase in rotational load due to the food-grade grease GF can be suppressed more than in the reverse case.

The output members 26 and 27, which constitute an outer shell of the first power transmission device 61, frequently come into contact with detergent droplets. In a case where the detergent is alkaline, the output members 26 and 27 that come into contact with the droplets may deteriorate. In this regard, in the embodiment, the output members 26 and 27 of the first power transmission device 61 are made of an alkali-resistant resin. The possibility of deterioration of the output members 26 and 27 due to contact with alkaline detergent can be reduced. In other words, since the deterioration of the output members 26 and 27 is small, general alkaline detergent can be used. The alkali-resistant resin is not limited, but a PEEK material is employed in the embodiment. In the embodiment, the casings 21 and 22, which frequently come into contact with detergent droplets, are also made of an alkali-resistant resin.

In the embodiment, the output members 26 and 27 of the first power transmission device 61 are made of a resin with higher alkali resistance than that of the other resin members of the first power transmission device 61. In this case, it is more cost-effective compared to a case where all the resin members are made of a resin with higher alkali resistance. For example, the casing 23 may be made of a POM material, and the output members 26 and 27 may be made of a PEEK material with higher alkali resistance than that of the POM material. The casings 21 and 22 may be made of a PEEK material or a POM material. In addition, in a case where the input shaft 11 or the receiving plate members 36 and 37 are formed into resin members, the input shaft 11 or the receiving plate members 36 and 37 may be made of a POM material with lower alkali resistance than that of PEEK. Note that the other resin members of the first power transmission device 61 mean members that are incorporated when the first power transmission device 61 is shipped as the first power transmission device 61, and do not include a member on a robot 1 side after the first power transmission device 61 is incorporated into the robot 1.

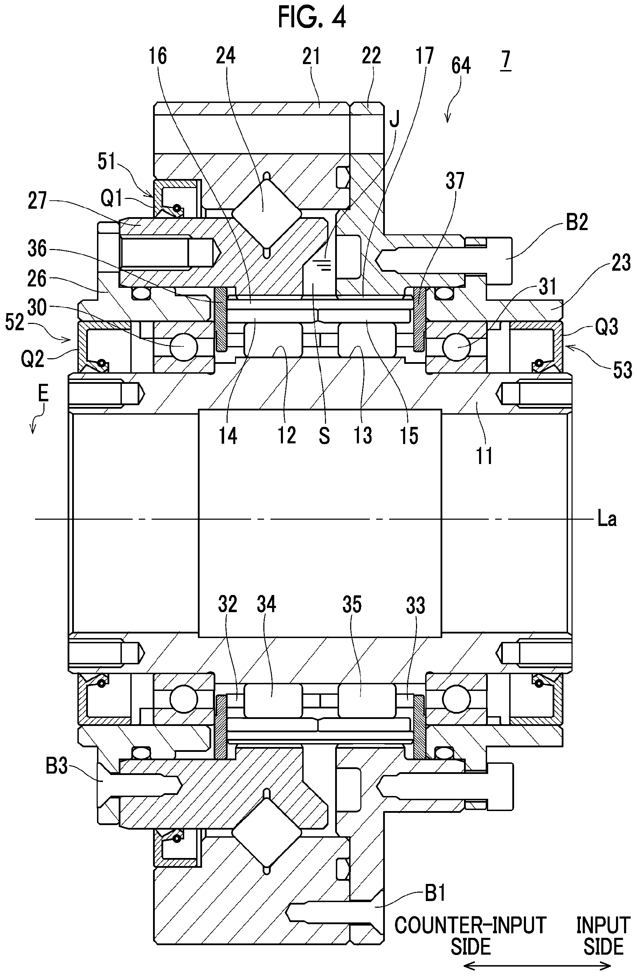

Hereinafter, the fourth power transmission device 64, which is an example of the separate power transmission device 7, will be described with reference to Fig. 4. Fig. 4 is a side view schematically showing the fourth power transmission device 64. The separate drive unit 6 located farther from the gripping unit 3 of the cleaning target object 2 than the specific drive unit 4 located close to the gripping unit 3 comes into contact with detergent droplets less frequently than the specific power transmission device 5. In this regard, in the embodiment, the separate power transmission device 7 includes oil seals Q1, Q2, and Q3 that are disposed in gap portions 51, 52, and 53 provided between the internal space S and the external space E. In this case, the gaps of the gap portions 51, 52, and 53 can be configured more broadly and simply than the specific gap portions 41, 42, and 43, thereby making the gap processing easier.

In Fig. 4, the same or equivalent components and members as those of the first power transmission device 61 are denoted by the same reference numerals. In the description of the fourth power transmission device 64, duplicated descriptions will not be repeated as appropriate, and differences will be mainly described.

In the embodiment, the fourth power transmission device 64 is a bending meshing type gear device including the input shaft 11, the wave generators 12 and 13, the external gears 14 and 15, the main bearing 24, the wave generator shaft bearings 30 and 31, the wave generator bearings 34 and 35, the internal gears 16 and 17, the casings 21, 22, and 23, the output members 26 and 27, the receiving plate members 36 and 37, and the oil seals Q1, Q2, and Q3 disposed in the gap portions 51, 52, and 53. The fourth power transmission device 64 is different from the first power transmission device 61 in that the fourth power transmission device 64 does not include the specific gap portion and the food-grade grease but includes the oil seals Q1, Q2, and Q3.

The first oil seal Q1 is provided in the gap portion 51 between the first casing 21 and the first output member 26, the second oil seal Q2 is provided in the gap portion 52 between the first output member 26 and the input shaft 11, and the third oil seal Q3 is provided in the gap portion 53 between the input shaft 11 and the third casing 23. The oil seals Q1, Q2, and Q3 of the embodiment are annular members made of a combination of a metal ring and a synthetic rubber.

Additionally, regarding the main bearing 24, while the first power transmission device 61 employs a ball bearing, the fourth power transmission device 64 employs a cross roller bearing. As a result, since the main bearing 24 is disposed farther from the gripping unit 3, the load capacity of the main bearing 24 of the fourth power transmission device 64, which supports a larger moment load than the first power transmission device 61, can be increased.

The description of the first power transmission device 61 is applied to the input shaft 11, the wave generators 12 and 13, the external gears 14 and 15, the main bearing 24, the wave generator shaft bearings 30 and 31, the wave generator bearings 34 and 35, the internal gears 16 and 17, the casings 21, 22, and 23, the output members 26 and 27, and the receiving plate members 36 and 37 of the fourth power transmission device 64, unless contradictions arise.

In the embodiment, the output members 26 and 27 of the first power transmission device 61 (specific power transmission device) are made of a resin with higher alkali resistance than that of the resin component of the fourth power transmission device 64 (separate power transmission device). For example, the resin component (for example, the output member) of the fourth power transmission device 64 may be made of a POM material, and the output members 26 and 27 of the first power transmission device 61 may be made of a PEEK material with higher alkali resistance than that of the POM material. In this case, the cost of the fourth power transmission device 64 can be reduced while suppressing the deterioration of the output members 26 and 27 of the first power transmission device 61.

The features of the power transmission device 5 (first power transmission device 61) configured as described above will be described. The power transmission device 5 is a power transmission device incorporated into the robot 1 that grips the cleaning target object 2 and that performs a process of cleaning the cleaning target object 2, and includes the specific gap portions 41, 42, and 43 provided between the internal space S and the external space E of the power transmission device, and the food-grade grease GF applied to seal the specific gap portions 41, 42, and 43. According to this configuration, it is possible to provide a power transmission device that can be used in an environment where detergent splashes are scattered, while suppressing the effect of the detergent. Specifically, since the oil seal is not used, the deterioration of the oil seal due to detergent can be prevented, while the entry of detergent or water from the specific gap portions 41, 42, and 43 can be prevented by the food-grade grease. Moreover, since the specific gap portions 41, 42, and 43 are sealed by the food-grade grease, even in a case where the food-grade grease leaks to the outside, it will not cause harm.

The features of the robot 1 configured as described above will be described. The robot 1 is a robot that grips the cleaning target object 2 and that performs a process of cleaning the cleaning target object 2. The robot 1 includes the specific power transmission device 5 that is incorporated into the specific drive unit 4 located close to the gripping unit 3 of the cleaning target object 2, and the separate power transmission device 7 that is incorporated into the separate drive unit 6 located farther from the gripping unit 3 than the specific drive unit 4. The specific power transmission device 5 is a power transmission device including the specific gap portions 41, 42, and 43 between the internal space S and the external space E of the power transmission device 5. The separate power transmission device 7 is a power transmission device in which the oil seals Q1, Q2, and Q3 are disposed in the gap portions 51, 52, and 53 provided between the internal space S and the external space E. According to this configuration, it is possible to provide a robot that can be used in an environment where detergent splashes are scattered, while suppressing the effect of the detergent on the specific power transmission device 5.

Hitherto, the example of the embodiment of the present invention has been described in detail. The embodiment mentioned above is merely specific examples for implementing the present invention. The content of the embodiment does not limit the technical scope of the present invention, and various design changes, such as changes, additions, or deletions of components, can be made within the scope that does not depart from the concept of the invention defined in the claims. In the embodiment mentioned above, contents that allow for such design changes have been described with notations such as "of the embodiment" or "in the embodiment". However, the absence of such notations does not imply that design changes are not permissible for the described contents. The hatching applied to the cross-sections in the drawings does not limit the material of the hatched object.

Hereinafter, modification examples will be described. In the drawings and descriptions of the modification examples, the same or equivalent components and members as those of the embodiment are denoted by the same reference numerals. Descriptions that overlap with those of the embodiment will not be repeated as necessary, and configurations different from the embodiment will be mainly described.

In the description of the embodiment, an example has been described in which the first power transmission device 61 and the fourth power transmission device 64 are cylindrical bending meshing type gear devices, but the present invention is not limited thereto. For example, either or both of these may be other types of gear devices. Examples of such other types of gear devices include cup-type and silk-hat-type bending meshing type gear devices, center crank-type and differential-type eccentric oscillation gear devices, simple planetary gear devices, parallel-axis gear devices, orthogonal gear devices, and the like. In addition, as mentioned above, the power transmission device is not limited to the gear device, and the traction drive, the motor, and various actuators can be employed.

In the description of the embodiment, an example has been described in which three power transmission devices located close to the gripping unit 3 are specific power transmission devices adapted for detergent use; however, the present invention is not limited thereto. One, two, or four or more power transmission devices located close to the gripping unit 3 may be specific power transmission devices adapted for detergent use. Additionally, in a case of a robot including a plurality of power transmission devices (a plurality of joints), it is not essential for the power transmission device closest to the gripping unit 3 to be the specific power transmission device adapted for detergent use as long as at least one of the power transmission devices is such a specific power transmission device. It is preferable that the power transmission device of the joint that is most likely to be exposed to a cleaning liquid during the cleaning operation is the specific power transmission device. Further, since the power transmission device located closer to the gripping unit is more likely to be exposed to the cleaning liquid than the power transmission device located farther from the gripping unit, it is preferable to incorporate the specific power transmission device into the specific drive unit located closer to the gripping unit, and to incorporate the separate power transmission device into the separate drive unit located farther from the gripping unit than the specific drive unit. However, even in this case, the specific drive unit is not limited to the drive unit closest to the gripping unit, the separate power transmission device need only be incorporated into the drive unit located farther from the gripping unit than the specific drive unit, and the configuration of the power transmission device incorporated into the drive unit located closer to the gripping unit than the specific drive unit is not restricted.

In the description of the embodiment, an example has been described in which the gripping unit 3 includes the suction pad 88, but the present invention is not limited thereto. For example, the gripping unit may include a hand-type gripping mechanism instead of the suction pad.

Each of the above-described modification examples achieves the same operations and effects as the embodiment.

Any combination of the components of the above-described embodiment and the modification example is also useful as an embodiment of the present invention. The new embodiment resulting from the combination has the effects of both the combined embodiment and modification examples.

### Industrial Applicability

The present invention can be used for a power transmission device or a robot.

### Reference Signs List

1 robot
2 cleaning target object
3 gripping unit
4 specific drive unit
5 specific power transmission device
6 separate drive unit
7 separate power transmission device
21, 22, 23 casing
24 main bearing
26, 27 output member
41, 42, 43 specific gap portion
44, 45, 46 labyrinth structure
51, 52, 53 gap portion
61 first power transmission device
64 fourth power transmission device
Q1, Q2, Q3 oil seal

## Claims

1. A power transmission device incorporated into a robot that grips a cleaning target object or a cleaning member and that performs a process of cleaning the cleaning target object, the power transmission device comprising:
food-grade grease that is applied to seal a specific gap portion, the specific gap portion being provided between an internal space and an external space of the power transmission device.

2. The power transmission device according to claim 1,
wherein a lubricant different from the food-grade grease is enclosed in the internal space of the power transmission device.

3. The power transmission device according to claim 1,
wherein the specific gap portion has a labyrinth structure.

4. The power transmission device according to claim 3,
wherein the labyrinth structure is formed by a combination of a radial gap and an axial gap.

5. The power transmission device according to claim 1,
wherein the specific gap portion includes a first specific gap portion and a second specific gap portion in which a relative rotation speed of gap forming members is higher than a relative rotation speed in the first specific gap portion.

6. The power transmission device according to claim 5,
wherein the first specific gap portion is disposed radially outward of the second specific gap portion.

7. The power transmission device according to claim 1,
wherein an output member of the power transmission device is made of an alkali-resistant resin.

8. The power transmission device according to claim 7,
wherein the output member of the power transmission device is made of a resin with higher alkali resistance than alkali resistance of the other resin member of the power transmission device.

9. A robot that grips a cleaning target object or a cleaning member and that performs a process of cleaning the cleaning target object, the robot comprising:
a specific power transmission device that is incorporated into a specific drive unit located close to a gripping unit of the cleaning target object or the cleaning member; and
a separate power transmission device that is incorporated into a separate drive unit located farther from the gripping unit than the specific drive unit,
wherein the specific power transmission device is the power transmission device according to claim 1, and
the separate power transmission device is a power transmission device in which an oil seal is disposed in a gap portion provided between an internal space and an external space of the power transmission device.

10. The robot according to claim 9,
wherein an output member of the specific power transmission device is made of a resin with higher alkali resistance than alkali resistance of a resin component of the separate power transmission device.
